# EUROPÄISCHE PATENTANMELDUNG

(11) **EP 1 081 316 A1**
(43) Veröffentlichungstag der Anmeldung: **07.03.2001**
(21) Anmeldenummer: 00116479.7
(22) Anmeldetag: 29.07.2000
(51) Int. Cl.: E05B 49/00, B60R 25/00

(54) **Positionserkennung für Funkschlüssel**

(30) Priorität: 31.08.1999 DE 19941351
(71) Anmelder: Mannesmann VDO Aktiengesellschaft, 60388 Frankfurt am Main (DE)
(72) Erfinder: Berberich, Reinhold, 60439 Frankfurt (DE)
(74) Vertreter: Rassler, Andrea, Dipl.-Phys.

(57) **Zusammenfassung**

Bei einer Vorrichtung zur Bestimmung der Position eines tragbaren Funksenders einer Sicherheitseinrichtung (Funkschlüssel (4)) innerhalb eines vorgegebenen zu erfassenden Bereichs, insbesondere innerhalb eines Kraftfahrzeugs sind wenigstens zwei voneinander beabstandet angeordnete und zur Übermittlung von elektromagnetischen Signalen zu und/oder von einem innerhalb eines vorgegebenen Bereichs befindlichen Funkschlüssel ausgebildete Antennen (6) vorgesehen, deren Arbeitsbereich den vorgegebenen Bereich abdeckt.

Es wird ein Verfahren zur Feststellung der Schlüsselposition angegeben, bei dem in definierter, insbesondere zeitversetzter Folge Signale (6a,6b) zur Reizung des Funkschlüssels abgegeben werden. Unmittelbar nach Empfang eines Reizsignals gibt der Funkschlüssel (4) ein Schlüsselsignal (8) ab. Die Schlüsselsignale werden von den Antennen (6) aufgefangen. Aus dem Verhältnis der Signalstärken der an den Antennen ankommenden Schlüsselsignale wird dann auf die Position des Schlüssels zwischen den Antennen geschlossen.

## Beschreibung

Die Erfindung betrifft eine Vorrichtung zur Bestimmung der Position eines tragbaren Funksenders einer Sicherheitseinrichtung (Funkschlüssel) innerhalb eines vorgegebenen zu erfassenden Bereichs, insbesondere innerhalb eines Kraftfahrzeugs.

Für Kraftfahrzeuge werden heutzutage zunehmend Sicherungssysteme angeboten, die es ermöglichen, mit Hilfe eines tragbaren Funksenders (Funkschlüssel) das Fahrzeug zu entriegeln oder zu starten. Es stehen ferner halbautomatische Systeme zur Verfügung, mit deren Hilfe ein Entriegeln, beispielsweise einer Fahrzeugtür, vollautomatisch vorgenommen wird, sobald der Türgriff betätigt wird, so daß die Tür geöffnet werden kann, als sei sie nicht verriegelt gewesen.

Ermöglicht wird dies dadurch, daß der tragbare Funkschlüssel bei Betätigung des Türgriffes auf Anforderung eines Steuergeräts im Fahrzeug automatisch ein Freigabesignal sendet. Das Steuergerät empfängt das Signal über in den Säulen der Fahrzeugkarosserie angeordnete, nach außen und innen wirkende Antennen und öffnet das Türschloß bei Empfang eines passenden Signals. Auf ähnliche Weise kann ein Fahrzeug auch durch Knopfdruck gestartet werden, falls sich ein passender Funkschlüssel im Innenraum des Fahrzeugs befindet.

Die Unterscheidung zwischen Innen- und Außenraum des Fahrzeugs ist in diesem Zusammenhang notwendig, falls beispielsweise vermieden werden soll, daß das Fahrzeug gestartet werden kann, wenn sich ein Funkschlüssel außen am Fahrzeug befindet. Ferner soll es einem sich im Inneren des Fahrzeugs aufhaltenden Kind unmöglich sein, das Fahrzeug zu starten, wenn sich der Funkschlüssel nicht in der Nähe des Fahrerplatzes befindet, sondern beispielsweise auf der Rücksitzbank oder dem Beifahrersitz abgelegt wurde.

Es ist dazu zwar möglich, eine separate begrenzt empfangende Antenne im Bereich des Fahrerplatzes anzubringen, die den Zugriff auf die Startautomatik nur freigibt, wenn sich der Funkschlüssel unmittelbar am Fahrerplatz befindet. Eine derartige separate Empfangsantenne ist jedoch teuer und das System wird aufwendig in der Herstellung. Ferner bereitet es auch technische Schwierigkeiten, den Ansprechbereich der separaten Antenne exakt zu begrenzen, zumal die Abstrahlcharakteristik des Funkschlüssels lageabhängig ist.

Die Kosten und der Aufwand vergrößern sich noch mit weiteren Anforderungen bezüglich zu behandelnder Ausnahmesituationen der zuvor genannten Art, wenn weitere, begrenzt empfangende Antennen vorgesehen werden müssen.

Aufgabe der vorliegenden Erfindung ist es, eine Vorrichtung der eingangs genannten Art und ein Verfahren zu ihrer Verwendung anzugeben, welche es ermöglichen, die Position eines Funkschlüssels innerhalb des Fahrzeugs auf einfache, preiswerte Weise qualitativ zu bestimmen.

Diese Aufgabe wird mittels einer Vorrichtung nach dem Oberbegriff des Anspruchs 1 dadurch gelöst, daß wenigstens zwei voneinander beabstandet angeordnete und zur Übermittlung von elektromagnetischen Signalen zu und/oder von einem innerhalb eines vorgegebenen Bereichs befindlichen Funkschlüssel ausgebildete Antennen vorgesehen sind, deren Arbeitsbereich den vorgegebenen Bereich abdeckt.

Zur Ermittlung der Schlüsselposition innerhalb eines Kraftfahrzeugs ist bei einer ersten Ausgestaltung der Erfindung vorgesehen, daß die Antennen seitlich in den Säulen der Karosserie eines Kraftfahrzeugs angeordnet sind.

Bei einer Weiterbildung der Erfindung ist vorgesehen, daß die zu verwendenden Funkschlüssel zum unveränderten Zurücksenden (Spiegeln) eines empfangenen Signals ausgestattet sind.

Ein zur Lösung der Aufgabe geeignetes Verfahren sieht vor, daß in definierter, insbesondere in von Antenne zu Antenne zeitversetzter Folge Signale zur Reizung des Funkschlüssels abgegeben werden, daß unmittelbar nach Empfang eines Reizsignals der Funkschlüssel ein Schlüsselsignal abgibt, daß die Schlüsselsignale von den Antennen aufgefangen werden und daß aus dem Verhältnis der Signalstärken der an den Antennen ankommenden Schlüsselsignale auf die Position des Funkschlüssels zwischen den Antennen geschlossen wird.

Elektromagnetische Signale schwächen sich mit zunehmender Entfernung von dem Sender ab. Diese Tatsache macht sich die Erfindung zunutze, um aus einem Vergleich der ankommenden Signalstärken die Position des Funkschlüssels zu ermitteln. Indem zwei oder mehr Empfangsantennen im Raum angeordnet werden, kann die relative Position eines Funkschlüssels, der sich dazwischen befindet, ermittelt werden, ohne daß dazu die genaue Kennlinie der genannten Abschwächung bekannt sein muß. Ferner werden bei einer derartigen Anordnung mehrerer Empfänger Fehler durch eine lageabhängige Abstrahlcharakteristik des Funkschlüssels vermieden, d.h. die Bestimmung der Position des Funkschlüssels ist bei Verwendung von zwei Antennen dann unabhängig von dessen räumlicher Ausrichtung, wenn er sich auf einer Achse zwischen den Antennen befindet. Bei Einsatz einer entsprechend größeren Anzahl von Empfängern kann die Position des Funkschlüssels entsprechend auch in zwei- oder drei Dimensionen lageunabhängig bestimmt werden.

Aus Gründen des geringeren Bauvolumens sendet der Funkschlüssel üblicherweise mit Kurzwelle. Die Reizsignale werden dagegen in Langwelle gesendet.

Bei einer Weiterbildung der Erfindung ist vorgesehen, daß die Reizsignale von den Antennen ausgesendet werden. Durch die Benutzung der Antennen zur Aussendung der Reizsignale kann der Herstellungsaufwand der erfindungsgemäßen Vorrichtung minimiert werden.

Zur Vergrößerung des Meßeffektes ist bei einer nächsten Ausgestaltung des erfindungsgemäßen Verfahrens vorgesehen, daß die Reizsignale von dem Funkschlüssel nach Empfang als Schlüsselsignale im wesentlichen unverändert wieder ausgesendet (gespiegelt) werden. Durch die Rückspiegelung der Signale wird deren Lauflänge vergrößert. Damit stellt sich eine stärkere Abschwächung der Signalstärken ein.

Eine andere Ausgestaltung der Erfindung sieht vor, daß die Stärke der im Funkschlüssel empfangenen Reizsignale bereits im Funkschlüssel festgestellt wird und daß der Funkschlüssel mit der festgestellten Signalstärke modulierte Signale als Schlüsselsignale abgibt.

Dazu kann weiterhin vorgesehen sein, daß die Schlüsselsignale pulsbreitenmoduliert sind.

Schließlich kann vorgesehen sein, daß die Pulsbreitenmodulation durch Feststellen der Länge des einen vorgegebenen Amplituden-Schwellwert übersteigenden Teils des von dem Funkschlüssel aufgefangenen Reizsignals bestimmt wird. Durch die verwendeten Schwingkreise schwingen die Signale an und ab. Da die An- und Abschwingverläufe mit zunehmender Abschwächung der Signale ebenfalls anteilig abgeschwächt werden, resultiert daraus eine immer kürzer werdende Signaldauer. Die Dauer des den vorgegebenen Schwellwert überschreitenden Teils der Signale kann daher direkt als Maß für die Signalstärke verwendet werden.

Ausführungsbeispiele der Erfindung sind in der Zeichnung anhand mehrerer Figuren dargestellt und in der nachfolgenden Beschreibung näher erläutert. Es zeigt:
- Fig. 1: eine erfindungsgemäße Vorrichtung,
- Fig. 2: ein Diagramm der bei Durchführung des erfindungsgemäßen Verfahrens auftretenden Signalverläufe und
- Fig. 3: eine Kennlinie zur Bestimmung der Position des Funkschlüssels aus dem Verhältnis der Signalstärken bei Verwendung von zwei Antennen.

Gleiche Teile sind in den Figuren mit gleichen Bezugszeichen versehen.

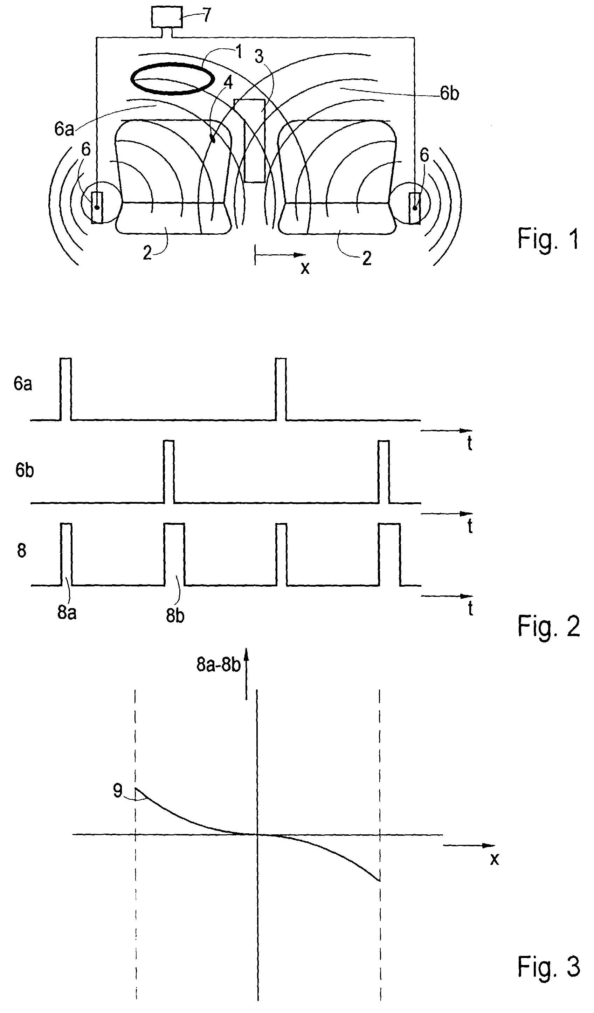

Fig. 1 zeigt schematisch den Innenraum eines Kraftfahrzeugs mit dem Lenkrad 1, den beiden vorderen Sitzen 2 und der Schaltkonsole 3 in Draufsicht. Auf einem der Fahrzeugsitze 2 liegt ein aktiver Funkschlüssel 4. Zur Feststellung von dessen Position werden von zwei in den Säulen 5 der Fahrzeugkarosserie untergebrachten Antennen 6 Reizsignale 6a, 6b zur Reizung des Funkschlüssels 4 ausgesendet.

Fig. 2 zeigt die Signalverläufe der an den Antennen 6 anstehenden Signale 6a, 6b. Der Funkschlüssel 4 empfängt die Reizsignale 6a, 6b der Antennen 6 und sendet sie als Schlüsselsignal 8 auf seiner Sendefrequenz wieder aus. Aufgrund der geringen Abstände im Fahrzeug entsteht nahezu kein Zeitverlust zwischen Senden und Empfangen, so daß die vom Funkschlüssel 4 rückgesendeten Signale leicht den Antennen 6 zugeordnet werden können. Ein Steuergerät 7 bewertet das Schlüsselsignal 8 und stellt fest, wie groß die Feldstärke der von jeder Antenne 6 stammenden Signale ist. Je größer die Feldstärke, desto geringer der Abstand zum Funkschlüssel 4. Aufgrund der hier verwendeten Pulsbreitenmodulation des Schlüsselsignals 8 werden größere Feldstärken durch breitere Impulse dargestellt. Der Funkschlüssel liegt also offenbar im Beispiel näher an der in Fig. 1 links angeordneten Antenne.

Anhand der in Fig. 3 dargestellten Kennlinie 9 wird nunmehr die Position x des Funkschlüssels 4 zwischen den Antennen 6 abgeschätzt. Hierzu werden die Signalfeldstärken der vom Funkschlüssel 4 rückgesendeten Signale 8a und 8b ins Verhältnis gesetzt. Die gestrichelten Linien kennzeichnen die Antennenpositionen.

## Patentansprüche

1. Vorrichtung zur Bestimmung der Position eines tragbaren Funksenders einer Sicherheitseinrichtung (Funkschlüssel) innerhalb eines vorgegebenen zu erfassenden Bereichs, insbesondere innerhalb eines Kraftfahrzeugs, **dadurch gekennzeichnet**, daß wenigstens zwei voneinander beabstandet angeordnete und zur Übermittlung von elektromagnetischen Signalen (6a,6b,8) zu und/oder von einem innerhalb eines vorgegebenen Bereichs befindlichen Funkschlüssel (4) ausgebildete Antennen (6) vorgesehen sind, deren Arbeitsbereich den vorgegebenen Bereich abdeckt.

2. Vorrichtung nach Anspruch 1, **dadurch gekennzeichnet**, daß die Antennen (6) seitlich in den Säulen der Karosserie eines Kraftfahrzeugs angeordnet sind.

3. Vorrichtung nach einem der vorhergehenden Ansprüche, **dadurch gekennzeichnet**, daß die zu verwendenden Funkschlüssel zum unveränderten Zurücksenden (Spiegeln) eines empfangenen Signals ausgestattet sind.

4. Verfahren zur Bestimmung der Position eines tragbaren Funksenders einer Sicherheitseinrichtung (Funkschlüssel) innerhalb eines vorgegebenen zu erfassenden Bereichs, insbesondere innerhalb eines Kraftfahrzeugs, mittels einer Vorrichtung nach einem der vorhergehenden Ansprüche, **dadurch gekennzeichnet**, daß in definierter, insbesondere in von Antenne zu Antenne zeitversetzter Folge Signale (6a,6b) zur Reizung des Funkschlüssels (4) abgegeben werden, daß unmittelbar nach Empfang eines Reizsignals (6a,6b) der Funkschlüssel (4) ein Schlüsselsignal abgibt, daß die Schlüsselsignale von den Antennen (6) aufgefangen werden und daß aus dem Verhältnis der Signalstärken der an den Antennen (6) ankommenden Schlüsselsignale auf die Position des Funkschlüssels (4) zwischen den Antennen (6) geschlossen wird.

5. Verfahren nach Anspruch 4, **dadurch gekennzeichnet**, daß die Reizsignale (6a,6b) von den Antennen (6) ausgesendet werden.

6. Verfahren nach einem der Ansprüche 4 oder 5, **dadurch gekennzeichnet**, daß die Reizsignale von dem Funkschlüssel nach Empfang als Schlüsselsignale im wesentlichen unverändert wieder ausgesendet (gespiegelt) werden.

7. Verfahren nach einem der Ansprüche 4 bis 6, **dadurch gekennzeichnet**, daß die Stärke der im Funkschlüssel (4) empfangenen Reizsignale (6a,6b) bereits im Funkschlüssel (4) festgestellt wird und daß der Funkschlüssel (4) mit der festgestellten Signalstärke modulierte Signale (8) als Schlüsselsignale abgibt.

8. Verfahren nach Anspruch 7, **dadurch gekennzeichnet**, daß die Schlüsselsignale (8) pulsbreitenmoduliert sind.

9. Verfahren nach Anspruch 8, **dadurch gekennzeichnet**, daß die Pulsbreitenmodulation durch Feststellen der Länge des einen vorgegebenen Amplituden-Schwellwert übersteigenden Teils des von dem Funkschlüssel (4) aufgefangenen Reizsignals (6a,6b) bestimmt wird.
